(19) **Europäisches Patentamt European Patent Office Office européen des brevets**

(11) **EP 3 505 379 B1**

(12) **EUROPEAN PATENT SPECIFICATION**

(45) Date of publication and mention of the grant of the patent:
**17.02.2021 Bulletin 2021/07**

(51) Int Cl.:
*B60K 6/46* (2007.10)     *B60W 30/188* (2012.01)
*B60W 50/00* (2006.01)     *B60W 20/10* (2016.01)

(21) Application number: **17382906.0**

(22) Date of filing: **26.12.2017**

(54) **METHOD FOR OBTAINING AND STORING THE OPTIMAL OPERATING POINTS OF A GENERATOR SET COMPRISING A HEAT ENGINE COUPLED TO AN ELECTRIC GENERATOR**

VERFAHREN ZUM ERHALTEN UND SPEICHERN DER OPTIMALEN BETRIEBSPUNKTE EINES GENERATORSATZES MIT EINER AN EINEN STROMGENERATOR GEKOPPELTEN WÄRMEKRAFTMASCHINE

PROCÉDÉ POUR OBTENIR ET STOCKER LES POINTS DE FONCTIONNEMENT OPTIMAUX D'UN ENSEMBLE GÉNÉRATEUR COMPRENANT UN MOTEUR THERMIQUE COUPLÉ À UN GÉNÉRATEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2019 Bulletin 2019/27**

(73) Proprietor: **Ikerlan, S. Coop.**
**20500 Mondragon (ES)**

(72) Inventors:
• **GAZTAÑAGA ARANTZAMENDI, Haizea**
  **48200 DURANGO (ES)**
• **HERRERA PEREZ, Victor Isaac**
  **20008 DONOSTIA - SAN SEBASTIAN (ES)**
• **MILO URQUIOLA, Aitor**
  **20249 ITSASONDO (ES)**

(74) Representative: **Igartua, Ismael et al**
**Galbaian S. Coop.**
**Garaia Parke Teknologikoa**
**Goiru Kalea 1**
**20500 Arrasate-Mondragón (ES)**

(56) References cited:
**US-A- 5 788 004     US-A- 6 167 339**

• **Kaitlyn Rose Wheeler ET AL: "Efficient Operation of Diesel Generator Sets in Remote Conditions", , 19 July 2017 (2017-07-19), XP055473120, Retrieved from the Internet: URL:https://vtechworks.lib.vt.edu/bitstrea m/handle/10919/78374/Wheeler_KR_T_2017.pdf ?sequence=1 [retrieved on 2018-05-07]**

**Description**

TECHNICAL FIELD

The present invention relates to power generator sets comprising a heat engine coupled to an electric generator, more specifically to methods for obtaining and storing the optimal operating points of said generator sets.

PRIOR ART

Methods for obtaining the optimal operating points of a generator set comprising a heat engine coupled to an electric generator are known. Patent document WO2008000071A1 describes an apparatus for selecting operating conditions of a generator set of this type in which said selection of operating conditions is performed such that a sum of cost values associated with the operating points in said set is minimized, and such that the speed of the heat engine increases or decreases monotonically with monotonous increases or decreases of the electrical power output values.

US6167339A describes a drive system for a vehicle comprising an internal combustion engine, a transmission with variable transmission ratio between the engine and the drive wheels, at least one auxiliary system driven by the internal combustion engine, especially an electrical generator, and a controller. The controller selects the transmission ratio within a range of potential ratios so as to achieve the maximum overall efficiency taking into account the individual operating efficiencies of the engine and the auxiliary system.

DISCLOSURE OF THE INVENTION

The object of the invention is to provide a method for obtaining and storing the optimal operating points of a generator set as defined in the claims.

Said generator set comprises a heat engine coupled to an electric generator, and has a plurality of possible operating points, each operating point comprising an angular speed of the heat engine, a torque of the electric generator and an output power of the generator set.

The method for obtaining and storing the optimal operating points of a generator set of the invention comprises four steps.

In the first step, all the possible combinations of angular speed of the heat engine and torque of the electric generator for each output power of the generator set are obtained.

Next, in the second step, the efficiency of the generator set in each of said combinations of angular speed of the heat engine and torque of the electric generator is calculated taking into account the efficiency of the heat engine and the efficiency of the electric generator at each of said possible operating points of the generator set.

Next, the optimum combination of angular speed of the heat engine and torque of the electric generator for each output power of the generator set is selected such that the efficiency of the generator set at each of the selected operating points is maximum. Said efficiency is calculated as the sum of the efficiency of the generator set calculated in the preceding step for each possible operating point of the generator set, and the efficiency of the transition to the angular speed of the heat engine at said operating point from the angular speed of the heat engine at the operating point previously selected for the immediately preceding power of said generator set.

Finally, said optimum combination of angular speed of the heat engine and torque of the electric generator for each output power of the generator set is stored in data storage means.

The method for obtaining and storing the optimal operating points of a generator set of the invention allows defining the operating points with maximum efficiency of the generator set in the entire range of power in which said generator set operates, which allows reducing emissions and fuel consumption associated with the heat engine of said generator set.

These and other advantages and features of the invention will become evident in view of the drawings and the detailed description of the invention.

DESCRIPTION OF THE DRAWINGS

Figure 1 shows a diagram of a hybrid vehicle with a series configuration in which all the elements are connected to a DC bus and in which the method of the invention can be applied.

Figure 2 shows a diagram of a micronetwork made up of a generator set, one or more renewable energy sources, an energy storage system, and loads, in which the method of the invention can be applied.

Figure 3 shows a schematic example of the ranges of output power of the generator set in each of the angular speeds at which the heat engine can operate.

Figures 4A and 4B show the flow diagram of an embodiment of the method of the invention.

DETAILED DISCLOSURE OF THE INVENTION

The method of the invention allows obtaining and storing in an analytical manner the optimal operating points of a generator set 1, also referred to as genset, comprising a heat engine 2 coupled to an electric generator 3.

The heat engine 2 of the generator set 1 may be an internal combustion engine. Said heat engine 2 is mechanically connected to the electric generator 3, where they can be connected to one another both directly and by means of a reducer 11. The function of the generator set 1 in which the method of the invention can be applied is to generate electric energy both for mobility applications and stationary applications.

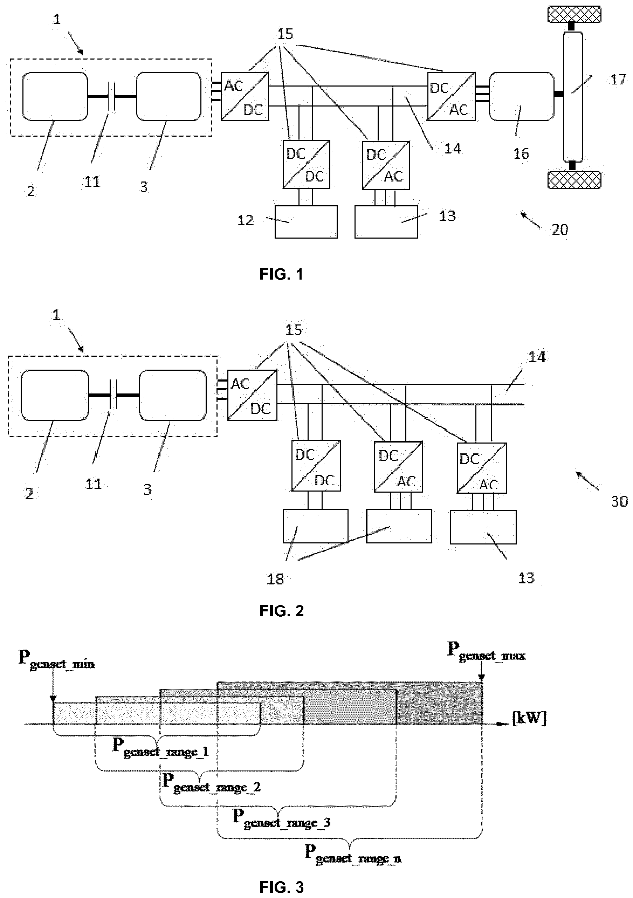

A possible scenario for a mobility application of a generator set 1 would be a hybrid vehicle 20, as shown in Figure 1. In said scenario, the generator set 1 together with an energy storage system 12 (for example, batteries), provide energy to the drive train of the hybrid vehicle 20. When said drive train has a series configuration, both the energy sources (heat engine 2, electric generator 3 and energy storage system 12) and the auxiliary loads 13 are connected to a direct current (DC) bus 14 by means of power converters 15 (DC/DC or AC/DC). The heat engine 2 is mechanically coupled to the electric generator 3 and to an AC/DC converter 15 for being connected to the DC bus 14. The main drive element is one or more electric engines 16 which are connected through an AC/DC converter 15 to the DC bus 14 and mechanically connected to the transmission system 17 which finally moves the hybrid vehicle 20. The scenarios in which this type of configuration is applied are mainly urban-type scenarios characterized by low speed operation, continuous starting and stopping, and with restrictions on emissions and fuel consumption, situations in which this configuration has a greater performance compared to other topologies.

As regards stationary applications, a possible scenario would be the generation of electric energy for micronetworks 30, as shown in Figure 2. In this scenario, the function of the generator set 1 would be to provide all the energy demanded by the loads 13 within the micronetwork 30, or to provide support in the case of micronetworks 30 including renewable energy systems 18 (such as solar panels or wind turbine generators). In this scenario, the type of power converter 15 located between the electric generator 3 and the micronetwork 30 depends on the bus 14 installed in said micronetwork 30 (AC or DC).

In both scenarios, both the rotational speed of the heat engine 2 and the torque provided by the electric generator 3 are completely independent of the speed and torque required by the transmission 17 during movement of the hybrid vehicle 20 (in the case of mobility application) and of the energy demanded by the micronetwork 30 (in the case of stationary application). The operation of the generator set 1 and the power required therefrom can therefore be independently controlled, offering a significant degree of freedom for the optimum and most efficient operation of the generator set 1.

The generator set 1 has a plurality of possible operating points, each possible operating point comprising an angular speed of the heat engine 2, a torque of the electric generator 3 and an output power of the generator set 1.

The method of the invention comprises the four steps that are explained below.

In the first step, all the possible combinations of angular speed of the heat engine 2 and torque of the electric generator 3 for each output power of the generator set 1 are obtained.

Next, in the second step, the efficiency of the generator set 1 in each of said combinations of angular speed of the heat engine 2 and torque of the electric generator 3 is calculated taking into account the efficiency of the heat engine 2 and the efficiency of the electric generator 3 at each of said possible operating points of the generator set 1.

Next, in the third step, for each output power of the generator set 1, the optimum combination of angular speed of the heat engine 2 and torque of the electric generator 3 in which the efficiency of the generator set 1 is maximum is selected. The efficiency of the generator set 1 at each possible operating point is calculated as the sum of the efficiency of the generator set 1 calculated in the preceding step of the method for each possible operating point of the generator set 1, and the efficiency of the transition to the angular speed of the heat engine 2 at said possible operating point from the angular speed of the heat engine 2 at the operating point previously selected for the immediately preceding power of said generator set 1.

Finally, in the fourth step, the optimum combination of angular speed of the heat engine 2 and torque of the electric generator 3 for each output power of the generator set 1 is stored in data storage means.

The method begins with the data provided in the efficiency maps both of the heat engine 2 and of the electric generator 3. The efficiency map of the heat engine 2 is a three-dimensional map where the X-axis represents the rotational speed of the shaft of the heat engine 2, the Y-axis represents the torque produced by said heat engine 2, and the Z-axis represents the efficiency of the heat engine 2 working at said angular speed and providing said torque. There is a similar efficiency map for the electric generator 3, in which the efficiency of the electric generator 3 is depicted for each angular speed value and each torque value of said electric generator 3.

The manufacturers of heat engines 2 and electric generators 3 provide these efficiency maps, although the values of said maps can also be obtained empirically.

The efficiency map of the heat engine 2 shows the range of speeds in which said heat engine 2 can operate. For each of said speeds, the heat engine 2 is capable of providing torque values in a range going from a minimum torque value to a maximum torque value, for each angular speed under consideration.

The method of the invention considers a set of discrete angular speeds $\omega_{TM\_i}$, where i varies in a range from 1 to $n_{TM}$, $n_{TM}$ being the number of discrete speeds that said heat engine 2 is capable of providing, $\omega_{TM\_1}$ being the minimum angular speed at which the heat engine 2 can operate, and $\omega_{TM\_n}$ being the maximum angular speed, such that each speed is greater than the preceding one in one and the same speed increment.

In a preferred embodiment of the method of the invention, said speed increment may be 0.1 rpm. However, this value for each speed increment does not intend to limit the present invention, and in other embodiments said increment may take another value.

As mentioned above, for each angular speed $\omega_{TM\_i}$, the heat engine 2 is capable of providing torque values in a range going from a minimum torque value $T_{TM\_min\_i}$ to a maximum torque value $T_{TM\_max\_i}$. These minimum and maximum torque values are defined by restrictions imposed by the manufacturer of the heat engine 2.

Therefore, the range of output power $P_{genset\_range\_i}$ of the generator set 1 for a specific rotational speed $\omega_{TM\_i}$ of the heat engine 2 is limited by a minimum power value $P_{genset\_min\_i}$ and a maximum power value $P_{genset\_max\_i}$, as seen in Equation 1:

$$P_{genset\_min\_i} \leq P_{genset\_i} \leq P_{genset\_max\_i} \; \rightarrow \; P_{genset\_range\_i} \; \forall \, i \in [1 \dots n_{TM}] \qquad \text{(Equation 1)}$$

Taking into account all the possible ranges of power of the generator set 1 ($P_{genset\_range\_i} \; \forall \; i \in [1...n_{TM}]$) included between the minimum output power $P_{genset\_min}$ and the maximum output power $P_{genset\_max}$ of the generator set 1, it is clear that some of these ranges overlap with one another, as shown in Figure 3. In other words, the same desired power value may be found in more than one range of powers, and therefore at different speed and torque setpoints of the heat engine 2.

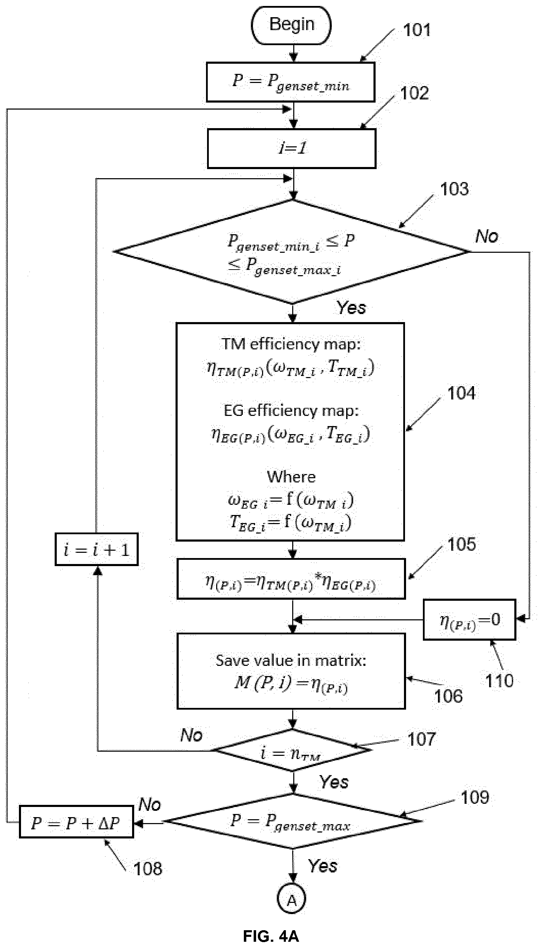

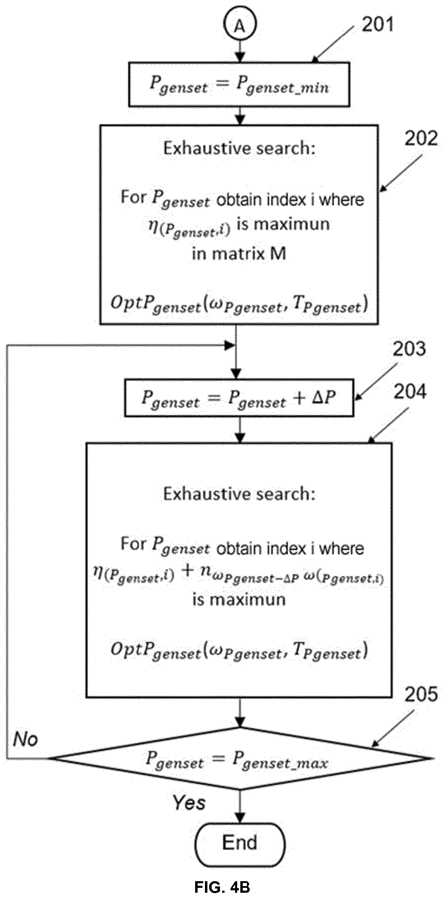

Figures 4A and 4B show a flow diagram in which the steps comprised by a preferred embodiment of the method of the invention are depicted. To be able to obtain all the possible combinations of angular speed of the heat engine 2 and torque of the electric generator 3 of the generator set 1, the method begins with an output power value P of the generator set 1 that is equal to the minimum output power thereof $P_{genset\_min}$, as can be seen in step 101 of Figure 4A.

In Figure 4A, in step 102, the method assigns a value *1* to variable *i*, and enters into a first loop, in which the value of *i* will be increased by one unit every time it goes through said loop, thereby running through the entire set of discrete angular speeds $\omega_{TM\_i}$, at which the heat engine 2 can operate. Next, in step 103 it is checked if the power *P* belongs to the range of powers between $P_{genset\_min\_i}$ and $P_{genset\_max\_i}$, i.e., if the output power value *P* of the generator set 1 being analyzed belongs to the range of output powers of the generator set 1 when it rotates at the angular speed $\omega_{TM\_i}$. If said power belongs to the range, the corresponding operating point would be obtained in step 104, i.e., the speed value $\omega_{TM\_i}$ and the torque value $T_{TM\_i}$ of the heat engine 2 with which said output power of the generator set 1 is obtained. By knowing said speed value $\omega_{TM\_i}$ and torque value $T_{TM\_i}$ of the heat engine 2, and by means of the efficiency map of the heat engine 2, the efficiency $\eta_{TM(P,i)}$ of the heat engine 2 for said output power *P* of the generator set 1, when it rotates at the angular speed $\omega_{TM\_i}$, will be obtained.

Once the angular speed value $\omega_{TM\_i}$ and the torque value $T_{TM\_i}$ of the heat engine 2 are known, the corresponding angular speed value $\omega_{EG\_i}$ and torque value $T_{EG\_i}$ of the electric generator 3 will be equal to those of the heat engine 2, in the event that both the heat engine 2 and the electric generator 3 are mechanically coupled to one another and rotating at the same angular speed, or will be calculated as a function of the angular speed value and torque value of the heat engine 2, in the event that there is a reducer device 11 between said heat engine 2 and said electric generator 3. By knowing said speed value $\omega_{EG\_i}$ and torque value $T_{EG\_i}$ of the electric generator 3, and by means of the efficiency map of said electric generator 3, the efficiency $\eta_{EG(P,i)}$ of the electric generator 3 for said output power *P* of the generator set 1, when the electric generator 3 rotates at the angular speed $\omega_{EG\_i}$, will be obtained.

In step 105 of the flow diagram of Figure 4A, the efficiency $\eta_{(P,i)}$ of the generator set 1 for the output power *P* of the generator set 1 and for the value *i* corresponding to the angular speed $\omega_{TM\_i}$ of the heat engine 2 is calculated as a product of the efficiency $\eta_{TM(P,i)}$ of the heat engine 2 and the efficiency $\eta_{EG(P,i)}$ of the electric generator 3 calculated in the preceding step. In step 106, the calculated efficiency $\eta_{(P,i)}$ of the generator set 1 is saved in a matrix *M(P,i)*. In said matrix *M(P,i)*, for each output power value P of the generator set 1 and angular speed value $\omega_{TM\_i}$ of the heat engine 2, the efficiency value $\eta_{(P,i)}$ of the corresponding generator set 1 is saved.

In the event that the output power *P* of the generator set 1 being analyzed does not belong to the range of output powers between $P_{genset\_min\_i}$ and $P_{genset\_max\_i}$, i.e., if the output power value $P$ of the generator set 1 being analyzed does not belong to the range of output powers of the generator set 1 when it rotates at the angular speed $\omega_{TM\_i}$, the efficiency value of the generator set 1 for said power $P$ and at angular speed $\omega_{TM\_i}$ would be 0, as shown in step 110 of Figure 4A.

In step 107 of the flow diagram of Figure 4A, it is checked if $i$ has reached the maximum value $n_{TM}$, i.e., if all the possible operating points, i.e., the operating points in all the discrete angular speeds of the heat engine 2, have been obtained for the output power $P$ of the generator set 1. If this is not the case, $i$ is increased by one unit, i.e., it goes to the next possible angular speed value of the heat engine 2, and the first loop is again repeated, i.e., steps 103 to 106. Once $i$ has reached the maximum value $n_{TM}$, all the possible operating points for said output power $P$ will have been obtained for the output power value $P$ of the generator set 1, and the efficiency at each of said possible operating points will have been saved in the matrix $M(P,i)$.

Next, in step 108 of the flow diagram of Figure 4A, the output power $P$ of the generator set 1 is increased by a value $\Delta P$, entering into a second loop in which steps 102 to 107 will be repeated. Every time the sequence of steps 102 to 107 is executed, all the possible operating points of the generator set 1 will be calculated for the power immediately greater than the power for which the possible operating points in the sequence of steps 102 to 107 executed immediately before have been calculated. Said immediately greater power will be greater than the power immediately preceding it by $\Delta P$. These steps 102 to 107 will be repeated until the power P reaches the maximum output power $P_{genset\_max}$ of the generator set 1, as shown in step 109 of Figure 4A.

The matrix $M(P,i)$ contains the efficiency values of all the possible operating points of the generator set 1 for each output power of the generator set 1 and in each possible angular speed of the heat engine 2. Selection of the optimal operating points begins in step 201 with an output power value $P_{genset}$ of the generator set 1 that is equal to the minimum output power $P_{genset\_min}$ of said generator set 1. In step 202 of the flow diagram of Figure 4B, for said minimum output power value of the generator set 1 the efficiencies $\eta_{(P_{genset},i)}$ of the possible operating points of the generator set 1 for that power $P_{genset}$ saved in the matrix $M(P,i)$ are analyzed, selecting that operating point at which said efficiency $\eta_{(P_{genset},i)}$ is maximum as the optimal operating point for the power $P_{genset}$. This first optimal operating point $OptP_{genset}$ will have an angular speed $\omega_{TM\_i}$ of the heat engine 2 and a torque $T_{EG\_i}$ of the electric generator 3, which will be referred to as $\omega_{Pgenset}$ and $T_{Pgenset}$.

The second optimal operating point will be the optimal operating point of the generator set 1 for an output power of said generator set 1 that is equal to the output power of the first optimal operating point $P_{genset}$, plus a power increment $\Delta P$.

To obtain said second optimal operating point, the efficiency of the generator set 1 for the power output $P_{genset} + \Delta P$ at each possible operating point will be calculated as the sum of the efficiency $\eta_{(P_{genset}+\Delta P,i)}$ saved in the matrix $M(P,i)$ for said possible operating point plus the efficiency of the transition $n_{\omega Pgenset\ \omega(Pgenset+\Delta P,i)}$ from the angular speed of the already calculated first optimal operating point $\omega_{Pgenset}$ to the angular speed of the heat engine 2 of said second possible operating point $\omega_{(Pgenset+\Delta P,i)}$.

From all the possible second operating points for the output power $P_{genset} + \Delta P$ of the generator set 1, the one whose efficiency of the generator set 1 is maximum will then be selected.

This second optimal operating point $OptP_{genset+\Delta P}$ will have an angular speed $\omega_{TM\_i}$ of the heat engine 2 and a torque $T_{EG\_i}$ of the electric generator 3, which will be referred to as $\omega_{Pgenset+\Delta P}$ and $T_{Pgenset+\Delta P}$.

The process used for calculating the second optimal operating point is the same as that which will be used for obtaining the rest of the optimal operating points of the generator set 1. In other words, the process to be followed for selecting the optimal operating points of the generator set 1 from the second optimal operating point is an iterative process, as seen in Figure 4B, in which steps 203, 204 and 205 are performed in each iteration.

In step 203 of the flow diagram of Figure 4B, the power $P_{genset}$ for which the optimal operating point is to be selected is increased by $\Delta P$. In step 204, the efficiency of the generator set 1 is calculated for each possible operating point at that new power $P_{genset}$ as the sum of the efficiency previously calculated in the matrix $M(P,i)$ for each possible operating point at said new power $P_{genset}$ plus the efficiency of the transition from the angular speed of the optimal operating point at the already calculated immediately preceding power $\omega_{Pgenset}$ to the angular speed of the heat engine 2 of each possible operating point at the new power $P_{genset}$, selecting the operating point at which the efficiency of the generator set 1 is maximum as the optimal operating point at the new power $P_{genset}$.

The method of the invention selects the operating point having the highest efficiency for each power increment, giving priority to those heat engine speed transitions that have greater efficiency in the transition itself.

In a preferred embodiment, the method of the invention calculates the efficiency of the transition from a first angular speed of the heat engine 2 to a second angular speed of the heat engine 2 as a function of at least one of the following variables: the time that the heat engine 2 needs to perform said transition, the thermal efficiency of the heat engine 2 when performing said transition, and the fuel consumption of the heat engine 2 when performing said transition, a weight being assigned to each of them if more than one of said variables is used.

The values of efficiency of the transition from a first angular speed of the heat engine 2 to a second speed of the heat engine 2 are saved in 3 matrices. The efficiency of the transition from each of the possible angular speeds of the heat engine 2 to each of the speeds of said heat engine 2 based on the time needed to perform said transition is saved in a T matrix. Said efficiency is inversely proportional to the time used by the heat engine 2 to perform the transition.

The efficiency of the transition from each of the possible angular speeds of the heat engine 2 to each of the speeds of said heat engine 2 based on the thermal efficiency of the heat engine 2 when performing said transition is saved in an R matrix.

The efficiency of the transition from each of the possible angular speeds of the heat engine 2 to each of the speeds of said heat engine 2 based on the fuel consumption needed to perform said transition is saved in an F matrix. Said efficiency is inversely proportional to the fuel used by the heat engine 2 to perform the transition.

The values saved in matrices T, R and F, i.e., the efficiency of the transition from each of the possible angular speeds of the heat engine 2 to each of the speeds of said heat engine 2 based on the time that the heat engine 2 needs to perform said transition, the thermal efficiency of the heat engine 2 when performing said transition, and the fuel consumption of the heat engine 2 when performing said transition, can be provided by the manufacturer of the heat engine, although they could also be obtained empirically.

The efficiency of the transition from the angular speed of the already selected optimal operating point for the output power $P_{genset}$ of the generator set 1 to one of the possible operating points for the immediately greater output power, i.e., the power $P_{genset} + \Delta P$, specifically for the angular speed $\omega_{TM\_i}$, of the heat engine 2 could be calculated by means of Equation 2:

$$n_{\omega_{Pgenset} \, \omega_{(Pgenset+\Delta P,i)}}$$
$$= T_{\omega_{Pgenset} \, \omega_{(Pgenset+\Delta P,i)}} * w_T + R_{\omega_{Pgenset} \, \omega_{(Pgenset+\Delta P,i)}} * w_R \quad \text{(Equation 2)}$$
$$+ F_{\omega_{Pgenset} \, \omega_{(Pgenset+\Delta P,i)}} * w_F$$

where $w_T$ is the weight assigned to the efficiency in the transition from a first angular speed of the heat engine 2 to a second angular speed of the heat engine 2 based on the time needed to perform said transition, $w_R$ is the weight assigned to the efficiency in the transition from a first angular speed of the heat engine 2 to a second angular speed of the heat engine 2 based on the thermal efficiency of the heat engine 2 when performing said transition, and $w_F$ is the weight assigned to the efficiency in the transition from a first angular speed of the heat engine 2 to a second angular speed of the heat engine 2 based on the fuel consumption used by the heat engine 2 to perform said transition.

The method of the invention considers in this embodiment three variables for calculating the efficiency of the transition from an angular speed to another angular speed of the heat engine, however, this choice of variables does not intend to limit the present invention, and in other embodiments these or other variables considered as being needed to be taken into account due to their relevance when selecting the optimal operating points could be used, each of them with the most suitable weight depending on their relevance.

In the calculation of the efficiency of each possible operating point, the method of the invention assigns in this embodiment a weight to the efficiency of the generator set 1 at each possible operating point for each output power of the generator set 1 calculated based on the efficiency of the heat engine 2 and the efficiency of the electric generator 3, and another weight to the efficiency of the transition to the angular speed of the heat engine 2 at each said possible operating point from the angular speed of the heat engine 2 at the operating point previously selected for the immediately preceding power of said generator set 1.

When calculating the efficiency of the generator set 1 at each possible operating point, two factors are taken into account, the stationary factor associated with the efficiency of the generator set 1 operating at an angular speed, and the transitory factor associated with shifting from said angular speed to another angular speed.

The efficiency of the generator set 1 at a possible operating point thereof for an output power $P_{genset} + \Delta P$, specifically for the angular speed $\omega_{TM\_i}$ of the heat engine 2, could be calculated by means of Equation 3:

$$n_{CG(Pgenset+\Delta P,i)} = M_{(Pgenset+\Delta P,i)} * w_M + (T_{\omega_{Pgenset} \, \omega_{(Pgenset+\Delta P,i)}} * w_T +$$
$$R_{\omega_{Pgenset} \, \omega_{(Pgenset+\Delta P,i)}} * w_R + F_{\omega_{Pgenset} \, \omega_{(Pgenset+\Delta P,i)}} * w_F) * w_X \quad \text{(Equation 3)}$$

where $w_M$ is the weight assigned to the stationary factor, i.e., to the efficiency of the generator set 1 calculated based only on the efficiency of the heat engine 2 and the efficiency of the electric generator 3, i.e., the efficiency saved in the matrix M, and $w_X$ is the weight assigned to the transient factor associated with the transition from the angular speed of the optimal point at the immediately preceding power $P_{genset}$, to the angular speed $\omega_{TM\_i}$ of the possible operating point at the power $P_{genset} + \Delta P$.

The method of the invention obtains the optimal operating points of a generator set 1 offline. Once obtained, the data relating to said optimal points is stored in data storage means, from which said data could be obtained. Said data storage means stores the angular speed value of the heat engine 2, the torque value of the electric generator 3 and the output power value of the generator set 1 at the optimal operating points of the generator set 1 which are obtained by means of the method of the invention.

The invention also relates to a control system for a generator set 1 comprising a heat engine 2 coupled to an electric generator 3, said system being arranged in communication with the heat engine 2 and the electric generator 3 of said generator set 1, the control system comprising the data storage means in which the angular speed value of the heat engine 2, the torque value of the electric generator 3 and the output power value of the generator set 1 at the optimal operating points of the generator set 1 which are obtained by means of the method of the invention are stored.

The system is configured for receiving an output power demand to be provided by the generator set 1. Next, the system selects, from the optimal operating points of the generator set 1 stored in the data storage means, that optimal point the output power of which corresponds to the demanded power, and determines the angular speed value of the heat engine 2 and the torque value of the electric generator 3 of said selected optimal point. The system then acts on the heat engine 2 so that it operates at the angular speed corresponding to the selected optimal point, and on the electric generator 3 so that it provides the torque corresponding to the selected optimal point.

The invention also relates to a hybrid vehicle 20 comprising said control system.

Finally, the invention also relates to a power unit for micronetworks comprising said control system.

**Claims**

**1.** Method for obtaining and storing the optimal operating points of a generator set comprising a heat engine (2) coupled to an electric generator (3), wherein the generator set (1) has a plurality of possible operating points, each operating point comprising an angular speed of the heat engine (2), a torque of the electric generator (3) and an output power of the generator set (1), comprising the following steps:

- obtaining all the possible combinations of angular speed of the heat engine (2) and torque of the electric generator (3) for each output power of the generator set (1),
- calculating the efficiency of the generator set (1) in each of said combinations of angular speed of the heat engine (2) and torque of the electric generator (3) taking into account the efficiency of the heat engine (2) and the efficiency of the electric generator (3) at each of said possible operating points of the generator set (1)

and **characterized by** the following steps:

- selecting the optimum combination of angular speed of the heat engine (2) and torque of the electric generator (3) for each output power of the generator set (1) such that the efficiency of the generator set (1) at each of the selected operating points is maximum, calculating said efficiency as the sum of the efficiency of the generator set (1) calculated in the preceding step for each possible operating point of the generator set (1), and the efficiency of the transition to the angular speed of the heat engine (2) at said operating point from the angular speed of the heat engine (2) at the operating point previously selected for the immediately preceding power of said generator set (1), and
- storing said optimum combination of angular speed of the heat engine (2) and torque of the electric generator (3) for each output power of the generator set (1) in data storage means.

**2.** Method according to claim 1, wherein the efficiency of the transition from a first angular speed of the heat engine (2) to a second angular speed of the heat engine (2) is calculated as a function of at least one of the following variables:

- the time that the heat engine (2) needs to perform said transition,
- the thermal efficiency of the heat engine (2) when performing said transition, and
- the fuel consumption of the heat engine (2) when performing said transition,

a weight being assigned to each calculated efficiency if more than one of said variables is used.

**3.** Method according to claim 1 or 2, wherein a weight is assigned to the efficiency of the generator set (1) at each possible operating point for each output power of the generator set (1) calculated based on the efficiency of the heat engine (2) and the efficiency of the electric generator (3), and another weight is assigned to the efficiency of the transition to the angular speed of the heat engine (2) at each said possible operating point from the angular speed of the heat engine (2) at the operating point previously selected for the immediately preceding power of said generator set (1).

4. Control system for a generator set (1) comprising a heat engine (2) coupled to an electric generator (3), said system being arranged in communication with the heat engine (2) and the electric generator (3) of said generator set (1), **characterised in that** it comprises the data storage means in which the angular speed value of the heat engine (2), the torque value of the electric generator (3) and the output power value of the generator set (1) at the optimal operating points of the generator set (1) which are obtained by means of the method according to any of claims 1 to 3 are stored, the system being configured for:

- receiving an output power demand to be provided by the generator set (1),
- selecting, from the optimal operating points of the generator set (1) stored in the data storage means, that optimal point the output power of which corresponds to the demanded power,
- determining the angular speed value of the heat engine (2) and the torque value of the electric generator (3) of said selected optimal point,
- acting on the heat engine (2) so that it operates at the angular speed corresponding to the selected optimal point, and
- acting on the electric generator (3) so that it provides the torque corresponding to the selected optimal point.

5. Hybrid vehicle (20) **characterised in that** it comprises a control system according to claim 4.

6. Power unit for micronetworks **characterised in that** it comprises a control system according to claim 4.

**Patentansprüche**

1. Verfahren zum Erhalten und Speichern der optimalen Betriebspunkte eines Generatorsatzes mit einer an einen Stromgenerator (3) gekoppelten Wärmekraftmaschine (2), wobei der Generatorsatz (1) eine Vielzahl von möglichen Betriebspunkten aufweist, wobei jeder Betriebspunkt eine Winkelgeschwindigkeit der Wärmekraftmaschine (2), ein Drehmoment des Stromgenerators (3) und eine Ausgangsleistung des Generatorsatzes (1) umfasst, welches die folgenden Schritte umfasst:

- das Erhalten aller möglichen Kombinationen von Winkelgeschwindigkeit der Wärmekraftmaschine (2) und Drehmoment des Stromgenerators (3) für jede Ausgangsleistung des Generatorsatzes (1),
- das Berechnen der Leistungsfähigkeit des Generatorsatzes (1) in jeder der genannten Kombinationen von Winkelgeschwindigkeit der Wärmekraftmaschine (2) und Drehmoment des Stromgenerators (3) unter Berücksichtigung der Leistungsfähigkeit der Wärmekraftmaschine (2) und der Leistungsfähigkeit des Stromgenerators (3) an jedem der genannten möglichen Betriebspunkte des Generatorsatzes (1)

und **gekennzeichnet durch** die folgenden Schritte:

- das Auswählen der optimalen Kombination von Winkelgeschwindigkeit der Wärmekraftmaschine (2) und Drehmoment des Stromgenerators (3) für jede Ausgangsleistung des Generatorsatzes (1), sodass die Leistungsfähigkeit des Generatorsatzes (1) an jedem der ausgewählten Betriebspunkte maximal ist, indem die genannte Leistungsfähigkeit als Summe der Leistungsfähigkeit des Generatorsatzes (1), welche im vorherigen Schritt für jeden möglichen Betriebspunkt des Generatorsatzes (1) berechnet wurde, und die Leistungsfähigkeit des Übergangs auf die Winkelgeschwindigkeit der Wärmekraftmaschine (2) am genannten Betriebspunkt von der Winkelgeschwindigkeit der Wärmekraftmaschine (2) am zuvor ausgewählten Betriebspunkt für die unmittelbar vorhergehenden Leistung des genannten Generatorsatzes (1) berechnet wird, und
- das Speichern der genannten optimalen Kombination von Winkelgeschwindigkeit der Wärmekraftmaschine (2) und Drehmoment des Stromgenerators (3) für jede Ausgangsleistung des Generatorsatzes (1) in Datenspeichermitteln.

2. Verfahren nach Anspruch 1, wobei die Leistungsfähigkeit des Übergangs von einer ersten Winkelgeschwindigkeit der Wärmekraftmaschine (2) auf eine zweite Winkelgeschwindigkeit der Wärmekraftmaschine (2) in Abhängigkeit von mindestens einer der folgenden Variablen berechnet wird:

- die Zeit, welche die Wärmekraftmaschine (2) braucht, um den genannten Übergang durchzuführen,

- die thermische Leistungsfähigkeit der Wärmekraftmaschine (2), wenn der genannte Übergang durchgeführt wird, und
- den Kraftstoffverbrauch der Wärmekraftmaschine (2), wenn der genannte Übergang durchgeführt wird,

wobei jeder berechneten Leistungsfähigkeit ein Gewicht zugeordnet wird, wenn mehr als eine der genannten Variablen verwendet wird.

3. Verfahren nach Anspruch 1 oder 2, wobei der Leistungsfähigkeit des Generatorsatzes (1) an jedem möglichen Betriebspunkt für jede Ausgangsleistung des Generatorsatzes (1), welche basierend auf der Leistungsfähigkeit der Wärmekraftmaschine (2) und der Leistungsfähigkeit des Stromgenerators (3) berechnet wurde, ein Gewicht zugeordnet wird, und der Leistungsfähigkeit des Übergangs auf die Winkelgeschwindigkeit der Wärmekraftmaschine (2) an jedem genannten möglichen Betriebspunkt von der Winkelgeschwindigkeit der Wärmekraftmaschine (2) am zuvor ausgewählten Betriebspunkt für die unmittelbar vorhergehende Leistung des genannten Generatorsatzes (1), ein anderes Gewicht zugeordnet wird.

4. Steuersystem für einen Generatorsatz (1) mit einer an einen Stromgenerator (3) gekoppelten Wärmekraftmaschine (2), wobei das genannte System in Kommunikation mit der Wärmekraftmaschine (2) und dem Stromgenerator (3) des genannten Generatorsatzes (1) angeordnet ist, **dadurch gekennzeichnet, dass** es das Datenspeichermittel umfasst, in welchem der Winkelgeschwindigkeitswert der Wärmekraftmaschine (2), der Drehmomentwert des Stromgenerators (3) und der Ausgangsleistungswert des Generatorsatzes (1) an den optimalen Betriebspunkten des Generatorsatzes (1), welche mittels des Verfahren nach einem der Ansprüche 1 bis 3 erhalten werden, gespeichert werden, wobei das System dazu ausgebildet ist:

   - eine Ausgangsleistungsforderung zu empfangen, welcher vom Generatorsatz (1) bereitzustellen ist,
   - aus den optimalen Betriebspunkten des Generatorsatzes (1), welche im Datenspeichermittel gespeichert sind, den optimalen Punkt auszuwählen, dessen Ausgangsleistung der geforderten Leistung entspricht,
   - die Winkelgeschwindigkeitswert der Wärmekraftmaschine (2) und den Drehmomentwert des Stromgenerators (3) des genannten ausgewählten optimalen Punkt, zu bestimmen,
   - auf die Wärmekraftmaschine (2) zu wirken, sodass es bei der Winkelgeschwindigkeit betrieben wird, welche dem ausgewählten optimalen Punkt entspricht, und
   - auf den Stromgenerator (3) zu wirken, sodass es das Drehmoment, welches dem ausgewählten optimalen Punkt entspricht, bereitstellt.

5. Hybridfahrzeug (20), **dadurch gekennzeichnet, dass** es ein Steuersystem nach Anspruch 4 umfasst.

6. Antriebseinheit für Mikronetze, **dadurch gekennzeichnet, dass** sie ein Steuersystem nach Anspruch 4 umfasst.

**Revendications**

1. Procédé pour obtenir et stocker les points de fonctionnement optimaux d'un groupe électrogène comprenant un moteur thermique (2) couplé à un générateur électrique (3), dans lequel le groupe électrogène (1) présente une pluralité de points de fonctionnement possibles, chaque point de fonctionnement comprenant une vitesse angulaire du moteur thermique (2), un couple du générateur électrique (3) et une puissance de sortie du groupe électrogène (1), comprenant les étapes suivantes :

   - obtenir toutes les combinaisons possibles de vitesse angulaire du moteur thermique (2) et de couple du générateur électrique (3) pour chaque puissance de sortie du groupe électrogène (1),
   - calculer le rendement du groupe électrogène (1) dans chacune desdites combinaisons de vitesse angulaire du moteur thermique (2) et de couple du générateur électrique (3) en prenant en compte le rendement du moteur thermique (2) et le rendement du générateur électrique (3) à chacun desdits points de fonctionnement possibles du groupe électrogène (1)

   et **caractérisé par** les étapes suivantes :

   - sélectionner la combinaison optimale de la vitesse angulaire du moteur thermique (2) et du couple du générateur électrique (3) pour chaque puissance de sortie du groupe électrogène (1) de telle sorte que l'efficacité du groupe électrogène (1) à chacun des points de fonctionnement sélectionnés soit maximale, le calcul dudit rendement comme la somme du rendement du groupe électrogène (1) calculé à l'étape précédente pour chaque point de fonctionnement possible du groupe électrogène (1), et du rendement de la transition vers la vitesse angulaire du moteur thermique (2) audit point de fonctionnement à partir de la vitesse angulaire du moteur thermique (2) au point de fonctionnement précédemment sélectionné pour la puissance immédiatement précédente dudit groupe électrogène (1), et

- stocker ladite combinaison optimale de la vitesse angulaire du moteur thermique (2) et du couple du générateur électrique (3) pour chaque puissance de sortie du groupe électrogène (1) dans des moyens de stockage de données.

2. Procédé selon la revendication 1, dans lequel l'efficacité de la transition d'une première vitesse angulaire du moteur thermique (2) à une deuxième vitesse angulaire du moteur thermique (2) est calculée en fonction d'au moins une des variables suivantes :

- le temps dont le moteur thermique (2) a besoin pour effectuer ladite transition, le rendement thermique du moteur thermique (2) lors de l'exécution de ladite transition, et
- la consommation de carburant du moteur thermique (2) lors de la réalisation de ladite transition,

un poids étant attribué à chaque efficacité calculée si plus d'une de ces variables est utilisée.

3. Procédé selon la revendication 1 ou 2, dans lequel un poids est attribué au rendement du groupe électrogène (1) à chaque point de fonctionnement possible pour chaque puissance de sortie du groupe électrogène (1) calculée sur la base du rendement du moteur thermique (2) et du rendement du générateur électrique (3), et un autre poids est attribué au rendement de la transition vers la vitesse angulaire du moteur thermique (2) à chacun desdits points de fonctionnement possibles à partir de la vitesse angulaire du moteur thermique (2) au point de fonctionnement précédemment sélectionné pour la puissance immédiatement précédente dudit groupe électrogène (1).

4. Système de commande pour un groupe électrogène (1) comprenant un moteur thermique (2) couplé à un générateur électrique (3), ledit système étant disposé en communication avec le moteur thermique (2) et le générateur électrique (3) dudit groupe électrogène (1), **caractérisé en ce que** il comprend les moyens de stockage de données dans lesquels la valeur de la vitesse angulaire du moteur thermique (2), la valeur du couple du générateur électrique (3) et la valeur de la puissance de sortie du groupe électrogène (1) aux points de fonctionnement optimaux du groupe électrogène (1) qui sont obtenus au moyen de la méthode selon l'une des revendications 1 à 3 sont stockées, le système étant configuré pour :

- recevoir une demande de puissance de sortie devant être fournie par le groupe électrogène (1),
- en sélectionnant, parmi les points de fonctionnement optimal du groupe électrogène (1) stockés dans les moyens de stockage des données, le point optimal dont la puissance de sortie correspond à la puissance demandée,
- déterminer la valeur de la vitesse angulaire du moteur thermique (2) et la valeur du couple du générateur électrique (3) dudit point optimal sélectionné, en agissant sur le moteur thermique (2) de manière à ce qu'il fonctionne à la vitesse angulaire correspondant au point optimal sélectionné, et
- agissant sur le générateur électrique (3) afin qu'il fournisse le couple correspondant au point optimal sélectionné.

5. Véhicule hybride (20) **caractérisé en ce qu'**il comprend un système de contrôle selon la revendication 4.

6. Unité de puissance **caractérisée en ce qu'**il comprend un système de contrôle selon la revendication 4.

**FIG. 1**

**FIG. 2**

**FIG. 3**

FIG. 4A

FIG. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008000071 A1
- US 6167339 A